**Europäisches Patentamt**

**European Patent Office**

**Office européen des brevets**

(19)

(11) Veröffentlichungsnummer : **0 365 965 B1**

(12)

# EUROPÄISCHE PATENTSCHRIFT

(45) Veröffentlichungstag der Patentschrift :
**20.05.92 Patentblatt 92/21**

(51) Int. Cl.⁵ : **B09B 5/00**, B03B 5/00

(21) Anmeldenummer : **89119170.2**

(22) Anmeldetag : **16.10.89**

(54) Anlage zum Spülen von Erdreich.

(30) Priorität : **27.10.88 DE 3836627**

(43) Veröffentlichungstag der Anmeldung :
**02.05.90 Patentblatt 90/18**

(45) Bekanntmachung des Hinweises auf die
Patenterteilung :
**20.05.92 Patentblatt 92/21**

(84) Benannte Vertragsstaaten :
**AT BE CH DE FR GB IT LI LU NL SE**

(56) Entgegenhaltungen :
EP-A- 0 278 328
DE-B- 1 022 531
DE-C- 724 267
DE-C- 847 581
DE-C- 908 721
DE-C- 918 441

(73) Patentinhaber : **KLÖCKNER OECOTEC GMBH**
**Neudorfer Strasse 3-5**
**W-4100 Duisburg 1 (DE)**

(72) Erfinder : **Heimhard, Hans-Jürgen, Dr.**
**Am Hang 29**
**W-4330 Mülheim-Saarn (DE)**
Erfinder : **Bräuer, Manfred**
**Goethestrasse 11**
**W-6140 Bensheim 3 (DE)**

(74) Vertreter : **Prüfer, Lutz H., Dipl.-Phys.**
**Harthauser Strasse 25d**
**W-8000 München 90 (DE)**

**Beschreibung**

Die Erfindung betrifft eine Anlage zum Spülen von Erdreich nach dem ersten Teil des Anspruches 1.

Aus der DE-PS 724 267 ist eine Anlage zum Entfernen von Schwereflüssigkeit von Aufbereitungserzeugnissen bekannt. Diese weist zwei hintereinander angeordnete Bereiche auf, die jeweils einen Wasserzuführbereich und ein daran anschließendes Sieb zum Abtropfen des Wassers aufweisen. Über dem Siebbereich wird das Wasser weitmöglichst von dem Schüttgut abgetrennt.

Aus der DE-C-908 721 ist es zum Zwecke der Wasserersparnis bekannt, bei einem Siebbereich aufgefangenes Brauchwasser einem vorangehenden Siebbereich zur Spülung zuzuführen.

Aufgabe der Erfindung ist es, eine Anlage zum Spülen von Erdreich nach der DE-C-724 267 so weiterzubilden, daß bei einem im wesentlichen gleichbleibenden Verbrauch von Frischwasser ein noch höherer Reinigungsgrad des zu behandelnden Erdreichs erreicht wird bzw. bei im wesentlichen gleichbleibendem Reinigungsgrad der Verbrauch von Frischwasser noch weiter gesenkt wird.

Diese Aufgabe wird durch die in Patentanspruch 1 gekennzeichnete Anlage zum Waschen von Erdreich gelöst.

Weiterbildungen der Erfindung sind in den Unteransprüchen gekennzeichnet.

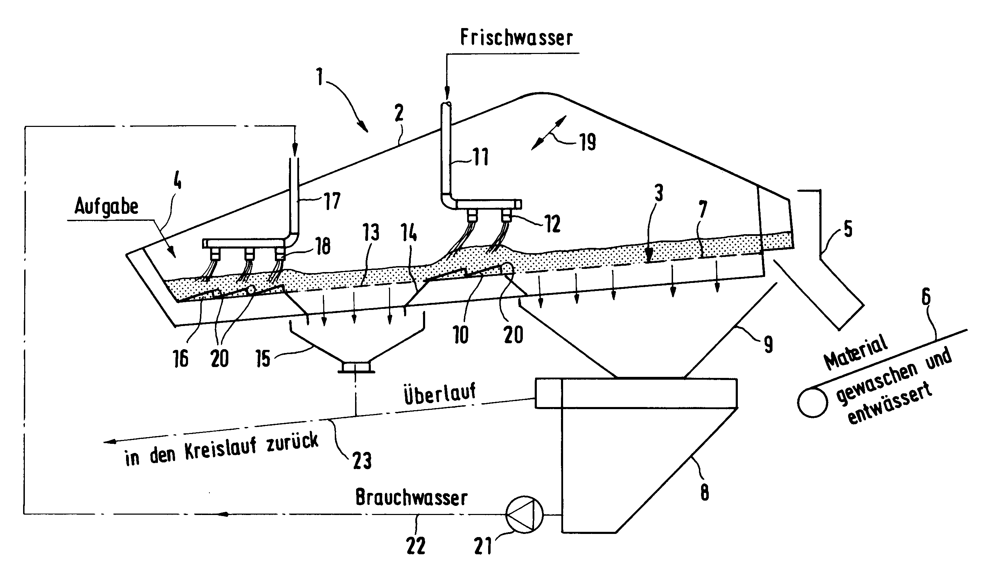

Weitere Merkmale und Zweckmäßigkeiten der Erfindung ergeben sich aus der Beschreibung eines Ausführungsbeispieles anhand der Figur. Die Figur zeigt eine Seitenansicht einer Anlage zum Waschen von Erdreich in schematischer Darstellung.

Die Anlage weist eine Spül-Sieb-Einrichtung 1 mit einem Gehäuse 2 auf. In dem Gehäuse erstreckt sich ein von der Eingangsseite zur Ausgangsseite leicht nach oben geneigter Boden 3. Am Eingang ist über dem Boden eine schematisch angedeutete Zuführung 4 für das zu behandelnde Erdreich und am Ausgang eine schematisch angedeutete Abführung 5 zum Abführen des behandelten Erdreiches über eine Transporteinrichtung 6 vorgesehen.

Der Boden 3 umfaßt ausgangsseitig einen großflächigen ersten Siebbereich 7 mit einem darunter angeordneten zu einem Wasserauffangbehälter 8 führenden Trichter 9. Vor dem ersten Siebbereich ist ein einen ersten Wasserzuführbereich bildender geschlossener Bodenabschnitt 10 vorgesehen. Über diesem ist eine Frischwasser-Zufuhrleitung vorgesehen, die über dem Boden Austrittsdüsen 12 aufweist, die so gerichtet sind, daß über dem Bodenabschnitt 10 befindliches Erdreich durch den auftreffenden Wasserstrahl aufgeschlämmt wird.

Vor dem Bodenabschnitt 10 ist ein zweiter Siebbereich 13 angeordnet, der auf seiner Unterseite über einen Trichter 14 in einen Auffangbehälter 15 führt. Vor dem zweiten Siebbereich 13 ist auf der Eingangsseite ein einen zweiten Wasserzuführbereich bildender geschlossener Bodenabschnitt 16 vorgesehen. Über diesem ist eine zweite Wasserzuführleitung 17 angeordnet, die auf ihrer Unterseite Düsen 18 aufweist, die so gerichtet sind, daß mit dem zuzuführenden Wasser über die Zuführung 4 dem Bodenabschnitt zugeführtes Erdreich aufgeschlämmt wird.

Die geschlossenen Bodenabschnitte 10 und 16 weisen, wie aus der Figur ersichtlich ist, zum Ausgang hin nach oben geneigte treppenförmige Abschnitte 10 auf. Ferner ist das Gehäuse in der durch Pfeil 19 angedeuteten Weise so gelagert, daß es über eine nicht gezeigte Rütteleinrichtung in Richtung des Pfeiles 19 gerüttelt wird. Dadurch wird erreicht, daß das über die Zuführung 4 eingereichte Erdreich über den Boden zu der Abführeinrichtung 5 hin gefördert wird.

Der Ausgang des Wasserauffangbehälters 8 ist über eine Pumpe 21 und eine Leitung 22 mit der Zufuhrleitung 17 verbunden. Der Ausgang des Auffangbehälters 15 ist über eine Leitung 23 mit einer nicht gezeigten Wasseraufbereitungsanlage verbunden, die das gewonnene aufbereitete Wasser der Zufuhrleitung 11 wieder zuführt.

In dem oben gezeigten Ausführungsbeispiel sind lediglich zwei Paare von Siebbereich und zugehörigem geschlossenen Bodenbereich hintereinander angeordnet. Es können mehrere solche Paare hintereinander angeordnet sein, wobei dann jeweils das aus dem nachfolgenden Siebbereich gewonnene Wasser dem vorgeordneten Bodenbereich kaskadenartig zugeführt wird.

Im Betrieb wird das aufzuschließende Erdreich über die Zuführung 4 eingeschüttet. Durch das Rütteln und das über die Zufuhrleitung 17 zugeführte Wasser wird dieses aufgeschlämmt und gespült. In dem nachfolgenden Siebbereich 13 wird das mit Schadstoffen belastete Wasser von dem verbleibenden Erdreich weitgehend abgetrennt. In dem nachfolgenden Bodenbereich 10 erfolgt ein weiteres Aufschlämmen des nun schon wesentlich weniger schadstoffbehafteten Erdreiches mit Frischwasser. In dem ausgangsseitigen ersten Siebbereich wird das schadstoffbelastete Wasser von dem gereinigten Erdreich abgetrennt. Das gereinigte Erdreich wird über die Abführeinrichtung 5 abgeleitet. Da das Frischwasser in dem Bereich 10 lediglich noch mit dem bereits vorgereinigten Erdreich in Kontakt kommt, ist dieses wesentlich weniger schadstoffbelastet als das aus dem Auffangbehälter 15 auslaufende Wasser. Es ist jedoch noch sehr gut geeignet, in dem vorhergehenden Bereich zum Ausschließen des wesentlich stärker schadstoffbelasteten Erdreiches zum Aufschlämmen des zu behandelnden Erdreiches verwendet zu werden und wird deshalb diesem Abschnitt zugeführt.

Auf diese Weise wird erreicht, daß das Erdreich durch die kaskadenartige Bearbeitung einen hohen Reinigungsgrad erreicht und daß gleichzeitig wenig Frischwasser benötigt wird, wodurch die Betriebskosten und die Belastung der Umwelt herabgesetzt werden.

Die Bodenabschnitte weisen, wie am besten aus der Figur ersichtlich ist, eine Flächenform auf, die in einem sich in Förderrichtung vom Eingang 4 zum Ausgang 5 erstreckenden vertikalen Schnitt gesehen sägezahnförmig ausgebildet ist, wobei der flache Anstieg der Sägezähne jeweils der Eingangsseite zugeneigt und der steile Abfall jeweils der Ausgangsseite zugeneigt ist. Dadurch wird erreicht, daß das Erdreich über den flachen Anstieg bewegt und an der Kante zum steilen Abstieg abfällt, wodurch ein Verfestigen vermieden und die Aufschlämmung verbessert wird.

## Patentansprüche

1. Anlage zum Spülen von Erdreich, mit einer Spül-Sieb-Einrichtung, einer eingangsseitig davon angeordneten Zuführung (4) und einer ausgangsseitig davon angeordneten Abführung (5), einem sich von der Eingangsseite zur Ausgangsseite erstreckenden Boden (3) mit einem ausgangsseitig angeordneten Siebbereich (7) mit einem darunter befindlichen Wasserauffang (8) zum Auffangen des Brauchwassers, einem dem Siebbereich (7) vorgeordneten ersten Wasserzufuhrbereich mit einer Zufuhr (11) von Frischwasser, einem dem ersten Wasserzufuhrbereich vorgeordneten zweiten Siebbereich (13) und einem diesem vorgeordneten weiteren Wasserzufuhrbereich mit einer weiteren Wasserzufuhr (17), dadurch gekennzeichnet, daß der Boden (3) von der Eingangsseite zur Ausgangsseite leicht nach oben ansteigt und daß der Ausgang (22) des Wasserauffangs (8) mit der zweiten Wasserzufuhr (17) zum Zuführen des Brauchwassers verbunden ist.

2. Anlage zum Spülen von Erdreich nach Anspruch 1, dadurch gekennzeichnet, daß ein oder mehrere weitere Siebbereiche und diesen jeweils vorgeordnete Wasserzufuhrbereiche vorgesehen sind und jedem Wasserzufuhrbereich über eine Wasserzufuhr das in dem in Ausgangsrichtung nachgeordneten Siebbereich aufgefangene Brauchwasser zugeführt wird.

3. Anlage zum Spülen von Erdreich nach Anspruch 1 oder 2, dadurch gekennzeichnet, daß der Spül-Sieb-Einrichtung ein Entwässerungssieb vorgeschaltet ist.

4. Anlage zum Spülen von Erdreich nach einem der Ansprüche 1 bis 3, dadurch gekennzeichnet, daß der erste und zweite Bodenabschnitt in einem sich in Förderrichtung vom Eingang zum Ausgang erstreckenden vertikalen Schnitt gesehen eine sägezahnförmige Oberfläche aufweisen, wobei der flache Anstieg der Zähne jeweils auf der Eingangsseite und der steile Abfall jeweils auf der Ausgangsseite liegen.

## Claims

1. An installation for the scouring of earth, with a scouring-screening apparatus, with a feeding means (4) arranged at its intake side, and a delivery means (5) arranged at its outlet side, a floor (3) extending from the intake side to the outlet side, with a screening zone (7) arranged at the outlet side with a water collection tank (8) arranged beneath it for the collection of the used water, a first water feeding zone arranged ahead of the screening zone (7) with a fresh-water supply line (11), a second screening zone (13) arranged ahead of the first water feeding zone and a further water feeding zone arranged ahead of the latter, with a further water supply line (17), characterized in that the floor (3) rises slightly up from the intake side to the outlet side and that the outlet (22) of the water collection tank (8) is connected to the second water supply line (17) for the feeding of the used water.

2. An installation for the scouring of earth according to claim 1, characterized in that provision is made for one or several screening zones and water feeding zones respectively disposed ahead of them, and that the used water collected in the screening zone, which in the starting direction is disposed down the line, is fed to each water feeding zone via a water supply line.

3. An installation for the scouring of earth according to claim 1 or 2, characterized in that the scouring-screening apparatus is preceded by a drainage screen.

4. An installation for the scouring of earth according to one of claims 1 to 3, characterized in that, viewed in a vertical section extending in the conveyance direction from the intake to the outlet, the first and second floor sections have a sawtooth-shaped surface, the flat rise of the teeth always lying on the intake side and the steep drop always on the outlet side.

## Revendications

1. Installation pour le lavage d'un sol, avec un dispositif de lavage et de criblage, une alimentation (4) disposée sur le côté d'entrée de celui-ci et une évacuation (5) disposée sur le côté de sortie de celui-ci, un fond (3) s'étendant du côté d'entrée au côté de sortie avec un secteur de criblage (7) disposé du côté de la sortie avec un collecteur d'eau (8) situé en-dessous pour recueillir l'eau usée, un premier secteur d'alimentation en eau situé en amont du secteur de criblage (7) avec une alimentation (11) en eau neuve, un second secteur de criblage (13) situé en amont du premier secteur d'alimentation en eau et un autre secteur d'alimentation en eau situé en amont de celui-ci avec une autre alimentation en eau (17), caractérisée en ce que le fond (3) est légèrement incliné vers le haut du côté d'entrée au côté de sortie et en ce que la sortie (22) du collecteur d'eau (8) est reliée avec la seconde alimentation en eau (17) pour l'apport de l'eau usée.

2. Installation pour le lavage d'un sol selon la revendication 1, caractérisée en ce qu'un ou plusieurs autres secteurs de criblage et secteurs d'alimentation en eau reliés correspondant respectivement à ceux-ci sont prévus et en ce que chaque secteur d'alimentation en eau reçoit par une arrivée d'eau l'eau usée captée dans le secteur de criblage situé en aval en direction de la sortie.

3. Installation pour le lavage d'un sol selon l'une quelconque des revendications 1 ou 2, caractérisée en ce que le dispositif de lavage et de criblage est monté en amont d'un crible d'assèchement.

4. Dispositif pour le lavage d'un sol selon l'une quelconque des revendications 1 à 3, caractérisée en ce que la première et la seconde sections du fond, vues en une coupe allant dans le sens du transport de l'entrée à la sortie, présentent une surface en dents de scie, la pente douce des dents étant tournée chaque fois vers l'entrée et la pente abrupte chaque fois vers la sortie.

Frischwasser

Aufgabe

Material gewaschen und entwässert

Überlauf

in den Kreislauf zurück

Brauchwasser

EP 0 365 965 B1